# EUROPÄISCHE PATENTSCHRIFT

(11) **EP 0 999 087 B1**
(45) Veröffentlichungstag und Bekanntmachung des Hinweises auf die Patenterteilung: **17.03.2004**
(21) Anmeldenummer: 99121134.3
(22) Anmeldetag: 22.10.1999
(51) Int. Cl.: B60K 35/00

(54) **Multifunktionsanzeige für Kraftfahrzeuge**
Multiple function display for motor vehicles
Afficheur à fonctions multiples pour automobiles

(30) Priorität: 04.11.1998 DE 19850784
(43) Veröffentlichungstag der Anmeldung: 10.05.2000
(73) Patentinhaber: Volkswagen Aktiengesellschaft, 38436 Wolfsburg (DE)
(72) Erfinder: Kiesewetter, Thomas, 38118 Braunschweig (DE)

(56) Entgegenhaltungen:
- EP-A- 0 771 686
- DE-A- 3 628 333

## Beschreibung

Die Erfindung betrifft eine Multifunktionsanzeige für Kraftfahrzeuge, die ein Anzeigefeld und eine Anzahl von dem Anzeigefeld zugeordneten Funktionsschaltern aufweist, wobei im Anzeigefeld der Multifunktionsanzeige die einem Funktionsschalter jeweils zugeordnete Funktionsbelegung durch eine Funktionsanzeige darstellbar ist, wobei die Funktionsbelegung der Funktionsschalter sowie die dazugehörige Funktionsanzeige im Anzeigenfeld der Multifunktionsanzeige in Abhängigkeit vom Betriebszustand des Kraftfahrzeugs änderbar ist.

Eine derartige Multifunktionsanzeige für Kraftfahrzeuge ist aus der DE 36 28 333 C2 bekannt. Darin ist eine Multifunktionsanzeige beschrieben, bei der durch Auswahlschalter der Multifunktionsanzeige Funktionsgruppen mit der Bezeichnung "Radio", "Bordcomputer", "Pilot", "Heizung", "Service" und "Norm" auswählbar sind. In Abhängigkeit von der jeweils über den Auswahlschalter ausgewählten Funktionsgruppe wird jedem Funktionsschalter der Multifunktionsanzeige eine Funktion aus der Menge der einer Funktionsgruppe zugeordneter Funktionen zugeordnet und auf der Anzeigefläche der Funktionsanzeige wird ein entsprechender Hinweis dargestellt. Hierbei ist vorgesehen, daß die angezeigten bzw. anzuzeigenden Funktionen sich in Abhängigkeit vom Betriebszustand des Kraftfahrzeuges während der eingeschalteten Zündung ändern kann.

Diese bekannte Multifunktionsanzeige besitz: des Nachteil, daß sie nur über eine eingeschränkte Funktionalität verfügt.

Es ist daher Aufgabe der Erfindung, eine Multifunktionsanzeige für Kraftfahrzeuge der eingangs genannten Art derart weiterzubilden, daß ihre Funktionalität insbesondere im Hinblick auf ihren Betriebszustand nach dem Ausschalten der Zündung erweitert ist.

Diese Aufgabe wird erfindungsgemäß dadurch gelöst, daß nach Außerbetriebnahme des Fahrzeugs zumindest für einen definierten Zeitraum auf dem Anzeigefeld der Multifunktionsanzeige mindestens eine Funktionsanzeige einer Abschalt-Funktionsgruppe dargestellt und mindestens einem Funktionsschalter eine der jeweils angezeigten Funktionsangabe korrellierte Funktionsbelegung zugeordnet wird.

Durch die erfindungsgemäßen Maßnahmen wird in vorteilhafter Art und Weise die Funktionalität der bekannten Multifunktionsanzeige, welche bis jetzt nur in einem Betriebszustand des Kraftfahrzeugs nach dem Einschalten der Zündung bis zum Abschalten derselben gegeben war, auf einen darüber hinausgehenden Betriebszustand erweitert, so daß durch die erfindungsgemäße Multifunktionsanzeige ein erweiterter Einsatzbereich gegeben ist. Durch das erfindungsgemäß vorgesehene und im Anzeigefeld der erfindungsgemäßen Multifunktionsanzeige dargestellte "Abschaltmenü", also die Abschalt-Funktionsgruppe, welche für den Benutzer des Kraftfahrzeuges beim oder nach dem Abstellen relevante Funktionen beinhaltet, wird in vorteilhafter Art und Weise erreicht, daß der Benutzer des Kraftfahrzeuges nun nicht mehr sich durch eine Vielzahl von unterschiedlichen Funktionsgruppen durcharbeiten muß, um auf die jeweils bei oder nach der Außerbetriebnahme des Kraftfahrzeuges erforderlichen Funktionen auslösen zu können.

Eine vorteilhafte Weiterbildung der Erfindung sieht vor, daß die Funktionsanzeigen der Abschalt-Funktionsgruppe im Anzeigefeld der Multifunktionsanzeige nach einem definierten Zeitraum erlöschen, wenn der Benutzer keine Eingabe getätigt hat. Eine derartige Maßnahme besitzt den Vorteil, daß hierdurch eine deutliche Stromeinsparung erzielbar ist.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, daß im folgenden anhand der einzigen Figur beschrieben wird. Es zeigt:

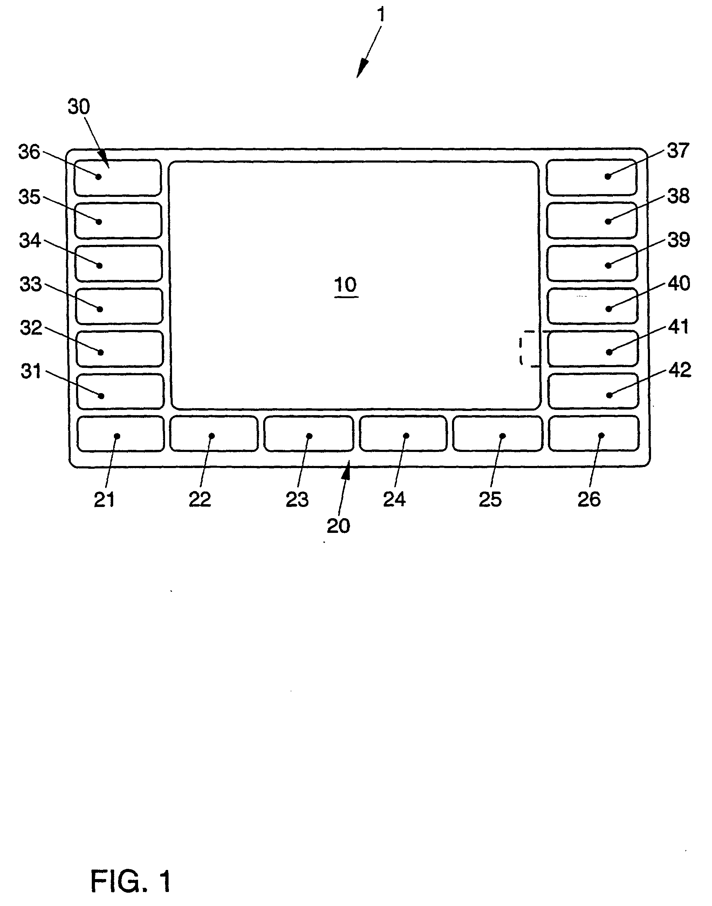

Figur 1 ein Ausführungsbeispiel einer Multifunktionsanzeige nach Außerbetriebnahme des Fahrzeuges,

In Figur 1 ist ein Ausführungsbeispiel einer Multifunktionsanzeige für Kraftfahrzeuge dargestellt, die ein Anzeigefeld 10, sowie ein Auswahltasten-Feld 20 mit Auswahltasten 21-26 und ein Funktionstasten-Feld 30 mit Funktionstasten 31-42 aufweist. Durch ein Drücken der ersten Auswahltaste 21 des Auswahlttasten-Feldes 20 wird den Funktionstasten 31-42 des Funktionstasten-Feldes 30 jeweils eine definierte Funktion zugeordnet und auf dem Anzeigefeld 10 erscheint für jede der Funktionstasten 31-42 eine Funktionsanzeige, welche die der jeweiligen Funktionstaste 31-42 zugeordnete Funktion charakterisiert. In entsprechender Art und Weise wird durch ein Drücken einer der anderen Auswahltasten 32-36 den Funktionstasten 31-42 jeweils eine bestimmte Funktion aus der Menge einer bestimmten Funktionsgruppe zugeordnet. Eine derartige Multifunktionsanzeige mit einer Menüsteuerung ist bekannt und muß daher nicht mehr näher beschrieben werden.

Um nun den Funktionsbereich der bekannten Multifunktionsanzeigen, welche lediglich den Betriebszustand des Fahrzeuges bei eingeschalteter Zündung und während der Fahrt abdecken, zu erweitern, ist nun vorgesehen, daß nach der Außerbetriebnahme des Fahrzeuges, also im allgemeinen nach dem Abschalten der Zündung, nach dem Abziehen des Zündschlüssels oder allgemein vor dem Verlassen des Kraftfahrzeuges, ein Abschalt-Menü auf der Anzeigefläche 10 der Multifunktionsanzeige 1 des Kraftfahrzeuges eingeblendet und den Funktionstasten 31-42 die jeweils dargestellte zur, Funktionsanzeige korrellierte Funktion zugeordnet wird. In vorteilhafter Art und Weise umfaßt dabei die Funktionsgruppe des Abschalt-Menüs im wesentlichen diejenigen Funktionen, die für den Benutzer beim Abstellen des Fahrzeuges von Interesse sind.

Vorzugsweise kann vorgesehen sein, daß einer Funktionstaste - z. B. der Funktionstaste 36 - das Einschalten der Innenraumüberwachung zugeordnet und auf dem zu dieser Funktionstaste gehörigen Bereich des Anzeigefeldes 10 die Funktionsangabe "Innenraum-Überwachung ein" eingeblendet wird, oder daß ein Funktionsangabe "Alarm ein" erscheint und der zugehörigen Funktionstaste - z. B. der Funktionstaste 32 - die Funktion des Einschaltens des Alarms zugeordnet wird. Dem Fachmann ist aus vorstehender exemplarischer Aufzählung klar ersichtlich, welcher der vom Kraftfahrzeug bzw. dessen Bordcomputer bereitgestellten Funktionen er in das Abschalt-Menü integrieren kann oder soll, so daß eine weitere ausführliche Erläuterung hier nicht erforderlich ist.

Es wird bevorzugt, daß das Abschalt-Menü erlischt, wenn innerhalb eines definierten Zeitraums keine der Funktionstasten 31-42 betätigt wird und/oder wenn innerhalb einer definierten Zeitspanne nach der letzten Betätigung einer Funktionstaste 31-42 keine weitere Funktionstaste 31-42 betätigt wird.

## Patentansprüche

1. Multifunktionsanzeige für Kraftfahrzeuge, die ein Anzeigefeld (10) und eine Anzahl von dem Anzeigefeld (10) zugeordneten Funktionsschaltern (31-42) aufweist, wobei im Anzeigefeld (10) der Anzeigeeinrichtung (1) die einem Funktionsschalter (31-42) jeweils zugeordnete Funktionsbelegung durch eine Funktionsanzeige darstellbar ist, wobei die Funktionsbelegung der Funktionsschalter (31-42) sowie die dazugehörige Funktionsanzeige im Anzeigefeld (10) der Multifunktionsanzeige (1) in Abhängigkeit vom Betriebszustand des Kraftfahrzeuges änderbar ist, **dadurch gekennzeichnet, daß** nach Außerbetriebnahme des Kraftfahrzeuges zumindest für einen definierten Zeitraum auf dem Anzeigefeld (10) der Multifunktionsanzeige (1) mindestens eine Funktionsanzeige einer Abschalt-Funktionsgruppe dargestellt und mindestens einem Funktionsschalter (31-42) eine der jeweils angezeigten Funktionsangabe korrellierte Funktionsbelegung zugeordnet wird.

2. Multifunktionsanzeige nach Anspruch 1, **dadurch gekennzeichnet, daß** die Aktivierung der Abschalt-Funktionsgruppe durch das Abschalten der Zündung des Kraftfahrzeuges erfolgt.

3. Multifunktionsvorrichtung nach Anspruch 1, **dadurch gekennzeichnet, daß** die Aktivierung der Abschalt-Funktionsgruppe durch ein Abziehen des Zündschlüssels erfolgt.

4. Multifunktionsanzeige nach einem der vorangehenden Ansprüche, **dadurch gekennzeichnet, daß** die Abschalt-Funktionsgruppe durch ein Verlassen des Kraftfahrzeuges durch den Insassen aktivierbar ist.

5. Multifunktionsanzeige nach Anspruch 1, **dadurch gekennzeichnet, daß** die Funktionsanzeigen der Abschalt-Funktionsgruppe im Anzeigefeld (10) der Multifunktionsanzeige (1) nach einem definierten Zeitraum erlöschen.

6. Multifunktionsanzeige nach Anspruch 5, **dadurch gekennzeichnet, daß** die Funktionsanzeigen der Abschalt-Funktionsgruppe auf dem Anzeigefeld (10) der Multifunktionsanzeige (1) erlöschen, wenn der Benutzer des Kraftfahrzeuges innerhalb eines definierten Zeitraums keine Funktionstaste (31-42) betätigt und/oder wenn innerhalb einer definierten Zeitspanne nach der letzten Betätigung einer Funktionstaste (31-42) keine weitere Funktionstaste (31-42) betätigt wird.

7. Multifunktionsanzeige nach einem der vorangehenden Ansprüche, **dadurch gekennzeichnet, daß** die Multifunktionsanzeige (1) ein Auswahltasten-Feld (20) mit mehreren Auswahltasten (21-26) aufweist, durch deren Betätigung jeweils eine definierte Funktionsgruppe, die jeweils mehrere Funktionen enthält, aufrufbar ist.

## Claims

1. Multiple function display, for motor vehicles, which has a display panel (10) and a number of function switches (31-42) which are assigned by the display panel (10), the functional assignment which is respectively allocated to a function switch (31-42) being capable of being represented on the display panel (10) of the display device (1) by means of a function display, the functional assignment of the function switches (31-42) and the associated function display being capable of being modified in the display panel (10) of the multiple function display (1) as a function of the operating state of the motor vehicle, **characterized in that** after the motor vehicle is deactivated at least one function display of a switch-off function group is represented at least for a defined time period on the display panel (10) of the multiple function display (1), and a function assignment which is correlated to the respective displayed function information is assigned to at least one function switch (31-42).

2. Multiple function display according to Claim 1, **characterized in that** the switch-off function group is activated by switching off the ignition of the motor vehicle.

3. Multiple function display according to Claim 1, **characterized in that** the switch-off function group is activated by withdrawing the ignition key.

4. Multiple function display according to one of the preceding claims, **characterized in that** the switch-off function group can be activated by the vehicle occupant leaving the motor vehicle.

5. Multiple function display according to Claim 1, **characterized in that** the function displays of the switch-off function group are cleared from the display panel (10) of the multiple function display (1) after a defined time period.

6. Multiple function display according to Claim 5, **characterized in that** the function displays of the switch-off function group are cleared from the display panel (10) of the multiple function display (1) if the user of the motor vehicle does not activate a function key (31-42) within a defined time period and/or if no further function key (31-42) is activated within a defined time period after the last activation of a function key (31-42).

7. Multiple function display according to one of the preceding claims, **characterized in that** the multiple function display (1) has an array (20) of selection keys having a plurality of selection keys (21-26), activating which enables in each case a defined function group, which contains in each case a plurality of functions, to be called.

## Revendications

1. Afficheur à fonctions multiples pour automobiles, qui présente une zone d'affichage (10) et un nombre d'interrupteurs de fonction (31-42) attribués à la zone d'affichage (10), l'affectation de fonction attribuée respectivement à un interrupteur de fonction (31-42) pouvant être présentée par un affichage de fonction dans la zone d'affichage (10) du dispositif d'affichage (1), l'affectation de fonction des interrupteurs de fonction (31-42) et l'affichage de fonction correspondant pouvant être modifiés dans la zone d'affichage (10) de l'afficheur à fonctions multiples (1) en fonction de l'état de service du véhicule, **caractérisé en ce que**, après la mise hors service du véhicule, au moins un affichage de fonction d'un groupe de fonction d'arrêt est représenté au moins pour un laps de temps défini sur la zone d'affichage (10) de l'afficheur à fonctions multiples (1) et une affectation de fonction mise en corrélation avec l'indication de fonction respectivement affichée est attribuée à au moins un interrupteur de fonction (31-42).

2. Afficheur à fonctions multiples selon la revendication 1, **caractérisé en ce que** l'activation du groupe de fonction d'arrêt s'effectue par l'arrêt de l'allumage du véhicule.

3. Dispositif à fonctions multiples selon la revendication 1, **caractérisé en ce que** l'activation du groupe de fonction d'arrêt s'effectue par un enlèvement de la clef de contact.

4. Afficheur à fonctions multiples selon l'une quelconque des revendications précédentes, **caractérisé en ce que** le groupe de fonction d'arrêt peut être activé par le passager en quittant le véhicule.

5. Afficheur à fonctions multiples selon la revendication 1, **caractérisé en ce que** les affichages de fonction du groupe de fonction d'arrêt s'éteignent dans la zone d'affichage (10) de l'afficheur à fonctions multiples (1) après un laps de temps défini.

6. Afficheur à fonctions multiples selon la revendication 5, **caractérisé en ce que** les affichages de fonction du groupe de fonction d'arrêt s'éteignent sur la zone d'affichage (10) de l'afficheur à fonctions multiples (1) lorsque l'utilisateur du véhicule n'a pas actionné de touche de fonction (31-42) pendant un laps de temps défini et/ou lorsque aucune autre touche de fonction (31-42) n'est actionnée pendant un laps de temps défini après le dernier actionnement d'une touche de fonction (31-42).

7. Afficheur à fonctions multiples selon l'une quelconque des revendications précédentes, **caractérisé en ce que** l'afficheur à fonctions multiples (1) présente un panneau de touches de sélection (20) avec plusieurs touches de sélection (21-26), par l'actionnement desquelles on peut appeler respectivement un groupe de fonction défini qui contient respectivement plusieurs fonctions.
